# EUROPEAN PATENT APPLICATION

(11) **EP 4 697 767 A1**
(43) Date of publication of application: **18.02.2026**
(21) Application number: 24803704.6
(22) Date of filing: 08.05.2024
(51) Int. Cl.: H04W 8/18, H04W 8/24, H04W 24/08, H04W 88/06

(54) **METHOD AND DEVICE FOR MANAGING MUSIM GAP PRIORITY IN WIRELESS COMMUNICATION SYSTEM**

(30) Priority: 11.05.2023 KR 20230061045
(71) Applicant: Samsung Electronics Co., Ltd., Suwon-si, Gyeonggi-do 16677 (KR)
(72) Inventor: JUNG, Sangyeob, Suwon-si, Gyeonggi-do 16677 (KR)
(74) Representative: Nederlandsch Octrooibureau
(86) International application number: PCT/KR2024/006167
(87) International publication number: WO 2024/232651

(57) **Abstract**

The disclosure relates to a 5G or 6G communication system for supporting a higher data transmission rate. In an embodiment of the present disclosure, a method performed by a user equipment (UE) in a wireless communication system is provided. The method includes receiving, from a base station, a first radio resource control (RRC) reconfiguration message including information indicating that the UE is allowed to provide multi-universal subscriber identity module (MUSIM) assistance information for gap priority; and transmitting, to the base station, a UE assistance information message including a MUSIM gap priority preference list indicating MUSIM gap priorities preferred by the UE. The MUSIM gap priority preference list includes information representing respective priorities for all periodic MUSIM gap preference patterns as integer values.

## Description

### [Technical Field]

The disclosure relates to a wireless communication system. More specifically, the disclosure relates to a method and a device for configuring and managing a priority for a multi-universal subscriber identity module (MUSIM) gap in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure]

### [Technical Problem]

As the discussion on MUSIM operation in a wireless communication system has developed, a need for a method for configuring and managing gap priorities in order to prevent a conflict between a MUSIM gap and a measurement gap has emerged.

### [Technical Solution]

In an embodiment of the disclosure, a method performed by a user equipment (UE) in a wireless communication system is provided. The method includes receiving, from a base station, a first radio resource control (RRC) reconfiguration message including information indicating that the UE is allowed to provide multi-universal subscriber identity module (MUSIM) assistance information for gap priority, and transmitting, to the base station, a UE assistance information message including a MUSIM gap priority preference list indicating MUSIM gap priorities preferred by the UE. The MUSIM gap priority preference list includes information representing respective priorities for all periodic MUSIM gap preference patterns as integer values.

In an embodiment of the disclosure, a method performed by a base station in a wireless communication system is provided. The method includes transmitting, to a UE, a first RRC reconfiguration message including information indicating that the UE is allowed to provide MUSIM assistance information for gap priority, and receiving, from the UE, a UE assistance information message including a MUSIM gap priority preference list indicating MUSIM gap priorities preferred by the UE. The MUSIM gap priority preference list includes information representing respective priorities for all periodic MUSIM gap preference patterns as integer values.

In an embodiment of the disclosure, a UE in a wireless communication system is provided. The UE includes a transceiver and a controller. The controller is configured to receive, from a base station through the transceiver, a first RRC reconfiguration message including information indicating that the UE is allowed to provide MUSIM assistance information for gap priority, and to transmit, to the base station through the transceiver, a UE assistance information message including a MUSIM gap priority preference list indicating MUSIM gap priorities preferred by the UE. The MUSIM gap priority preference list includes information representing respective priorities for all periodic MUSIM gap preference patterns as integer values.

In an embodiment of the disclosure, a base station in a wireless communication system is provided. The base station includes a transceiver and a controller. The controller is configured to transmit, to a UE through the transceiver, a first RRC reconfiguration message including information indicating that the UE is allowed to provide MUSIM assistance information for gap priority, and to receive, from the UE, a UE assistance information message including a MUSIM gap priority preference list indicating MUSIM gap priorities preferred by the UE. The MUSIM gap priority preference list includes information representing respective priorities for all periodic MUSIM gap preference patterns as integer values.

### [Advantageous Effects]

According to an embodiment of the disclosure, a processing load of a terminal in a wireless communication system can be reduced and the communication efficiency of a network can be increased.

### [Description of Drawings]

FIG. 1 illustrates a structure of an LTE system according to an embodiment of the disclosure.
FIG. 2 illustrates a radio protocol structure in an LTE system according to an embodiment of the disclosure.
FIG. 3 illustrates a structure of a next-generation mobile communication system according to an embodiment of the disclosure.
FIG. 4 illustrates a radio protocol structure of a next-generation mobile communication system according to an embodiment of the disclosure.
FIG. 5 illustrates that a terminal (multi-USIM UE, hereinafter referred to as a MUSIM UE) supporting multiple universal subscriber identity modules (USIMs), while maintaining an RRC connected mode (RRC_CONNECTED) with a base station associated with one USIM, performs an operation associated with another USIM, according to an embodiment of the disclosure.
FIG. 6 illustrates that a terminal (multi-USIM UE, hereinafter referred to as a MUSIM UE) supporting multiple universal subscriber identity modules (USIMs), while maintaining an RRC connected mode (RRC_CONNECTED) with a base station associated with one USIM, performs an operation associated with another USIM, according to an embodiment of the disclosure.
FIG. 7 illustrates that a terminal (multi-USIM UE, hereinafter referred to as a MUSIM UE) supporting multiple universal subscriber identity modules (USIMs), while maintaining an RRC connected mode (RRC_CONNECTED) with a base station associated with one USIM, performs an operation associated with another USIM, according to an embodiment of the disclosure.
FIG. 8 illustrates that a terminal (multi-USIM UE, hereinafter referred to as a MUSIM UE) supporting multiple universal subscriber identity modules (USIMs), while maintaining an RRC connected mode (RRC_CONNECTED) with a base station associated with one USIM, performs an operation associated with another USIM, according to an embodiment of the disclosure.
FIG. 9 is a block diagram illustrating an internal structure of a UE according to an embodiment of the disclosure.
FIG. 10 is a block diagram illustrating a structure of an NR base station according to an embodiment of the disclosure.

### [Mode for Invention]

In describing embodiments set forth herein, descriptions related to technical contents well-known in the art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size. In the respective drawings, the same or corresponding elements are assigned the same reference numerals.

The advantages and features of the present disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card.

Hereinafter, the operation principle of the disclosure will be described in detail in conjunction with the accompanying drawings. In addition, a detailed description of known functions or configurations that may make the subject matter of the disclosure unclear will be omitted. The terms which will be described below are terms defined in consideration of the functions in the disclosure, and may be different according to users, intentions of the users, or customs. Therefore, the definitions of the terms should be made based on the contents throughout the specification.

In describing the disclosure below, a detailed description of known functions or configurations will be omitted when it is determined that the description may make the subject matter of the disclosure unnecessarily unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, terms and names defined in the 3rd generation partnership project long term evolution (3GPP LTE) standards will be used for the sake of descriptive convenience. However, the disclosure is not limited by these terms and names, and may be applied in the same way to systems that conform other standards. In the disclosure, the term "eNB" may be interchangeably used with the term "gNB" for the sake of descriptive convenience. That is, a base station described as "eNB" may refer to "gNB".

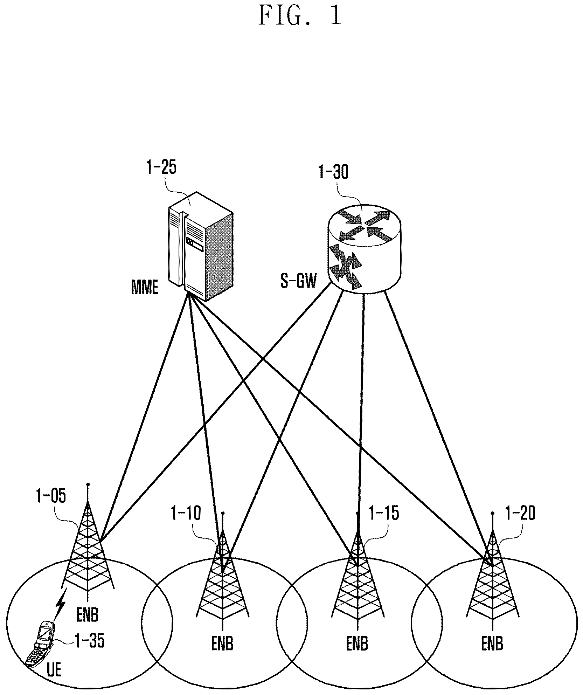

FIG. 1 illustrates a structure of an LTE system according to an embodiment of the disclosure.

Referring to FIG. 1, as illustrated therein, a radio access network of an LTE system includes next-generation base stations (evolved node Bs, hereinafter ENBs, node Bs, or base stations) 1-05, 1-10, 1-15, and 1-20, a mobility management entity (MME) 1-25, and a serving gateway (S-GW) 1-30. A user equipment (hereinafter UE or terminal) 1-35 accesses an external network through the ENBs 1-05 to 1-20 and the S-GW 1-30.

In FIG. 1, the ENBs 1-05 to 1-20 each correspond to a conventional node B in a UMTS system. The ENBs are connected to the UE 1-35 through a radio channel, and perform more complicated roles than the conventional node Bs. In the LTE system, since all user traffic including real-time services, such as voice over IP (VoIP) via the Internet protocol, is serviced through a shared channel, a device that collects state information, such as buffer states, available transmit power states, and channel states of UEs, and performs scheduling accordingly is required, and the ENBs 1-05 to 1-20 serve as the device. In general, one ENB controls multiple cells. For example, in order to implement a transfer rate of 100Mbps, the LTE system uses orthogonal frequency division multiplexing (hereinafter referred to as OFDM) as a radio access technology in a bandwidth of, for example, 20MHz. Furthermore, the next-generation mobile communication system employs an adaptive modulation & coding (hereinafter referred to as AMC) scheme for determining a modulation scheme and a channel coding rate according to a channel state of a UE. The S-GW 1-30 is a device that provides a data bearer, and generates or removes a data bearer under the control of the MME 1-25. The MME is a device responsible for various control functions as well as a mobility management function for a UE, and is connected to multiple base stations.

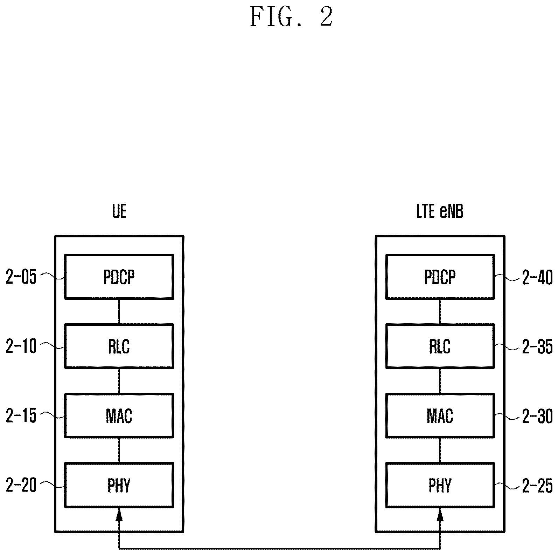

FIG. 2 illustrates a radio protocol structure in an LTE system according to an embodiment of the disclosure.

Referring to FIG. 2, a radio protocol of an LTE system includes a packet data convergence protocol (PDCP) 2-05 or 2-40, a radio link control (RLC) 2-10 or 2-35, and a medium access control (MAC) 2-15 or 2-30 on each of UE and ENB sides. The packet data convergence protocol (PDCP) 2-05 or 2-40 is responsible for operations such as IP header compression/reconstruction. The main functions of the PDCP are summarized as follows.
- Header compression and decompression: robust header compression (ROHC) only
- Transfer of user data
- In-sequence delivery of upper layer PDUs at PDCP re-establishment procedure for RLC AM
- For split bearers in DC (only support for RLC AM): PDCP PDU routing for transmission and PDCP PDU reordering for reception
- Duplicate detection of lower layer SDUs at PDCP re-establishment procedure for RLC AM
- Retransmission of PDCP SDUs at handover and, for split bearers in DC, of PDCP PDUs at PDCP data-recovery procedure, for RLC AM
- Ciphering and deciphering
- Timer-based SDU discard in uplink

The radio link control (hereinafter referred to as RLC) 2-10 or 2-35 reconfigures a PDCP protocol data unit (PDU) into an appropriate size to perform an ARQ operation. etc. The main functions of the RLC are summarized as follows.
- Transfer of upper layer PDUs
- Error Correction through ARQ (only for AM data transfer)
- Concatenation, segmentation and reassembly of RLC SDUs (only for UM and AM data transfer)
- Re-segmentation of RLC data PDUs (only for AM data transfer)
- Reordering of RLC data PDUs (only for UM and AM data transfer)
- Duplicate detection (only for UM and AM data transfer)
- Protocol error detection (only for AM data transfer)
- RLC SDU discard (only for UM and AM data transfer)
- RLC re-establishment

The MAC 2-15 or 2-30 is connected to several RLC layer devices configured in a single terminal, and multiplexes RLC PDUs into a MAC PDU and demultiplexes a MAC PDU into RLC PDUs. The main functions of the MAC are summarized as follows.
- Mapping between logical channels and transport channels
- Multiplexing/demultiplexing of MAC SDUs belonging to one or different logical channels into/from transport blocks (TB) delivered to/from the physical layer on transport channels
- Scheduling information reporting
- Error correction through HARQ
- Priority handling between logical channels of one UE
- Priority handling between UEs by means of dynamic scheduling
- MBMS service identification
- Transport format selection
- Padding

A physical layer 2-20 or 2-25 performs operations of channel-coding and modulating upper layer data, thereby obtaining OFDM symbols, and delivering the same through a radio channel, or demodulating OFDM symbols received through the radio channel, channel-decoding the same, and delivering the same to the upper layer.

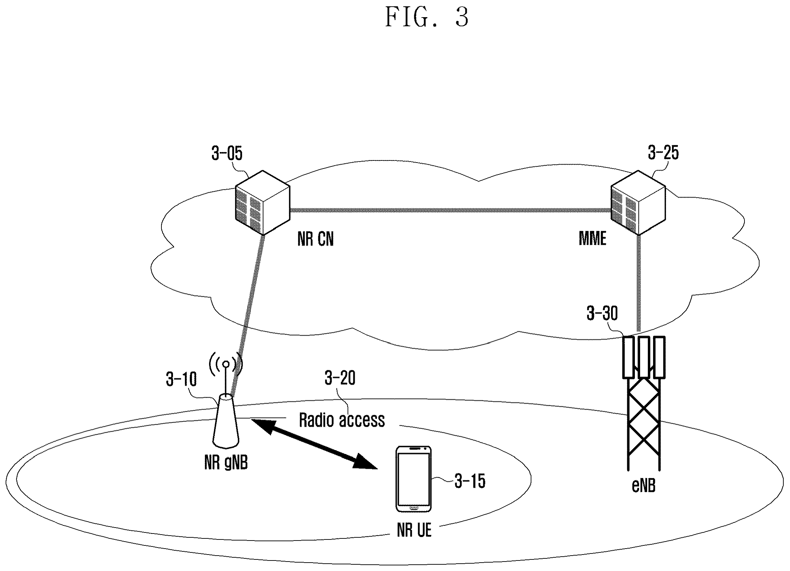

FIG. 3 illustrates a structure of a next-generation mobile communication system according to an embodiment of the disclosure.

Referring to FIG. 3, as illustrated therein, a radio access network of a next-generation mobile communication system (hereinafter NR or 5G) includes a next-generation base station (new radio node B, hereinafter NR gNB or NR base station) 3-10, and a new radio core network (NR CN) 3-05. A user terminal (new radio user equipment, hereinafter NR UE or NR terminal) 3-15 accesses an external network via the NR gNB 3-10 and the NR CN 3-05.

In FIG. 3, the NR gNB 3-10 corresponds to an evolved node B (eNB) of a conventional LTE system. The NR gNB may be connected to the NR UE 3-15 through a radio channel and provide outstanding services as compared to a conventional node B. In the LTE system, since all user traffic including real-time services, such as voice over IP (VoIP) via the Internet protocol, is serviced through a shared channel, a device that collects state information, such as buffer states, available transmit power states, and channel states of UEs, and performs scheduling accordingly is required, and the ENBs 1-05 to 1-20 serve as the device. In general, one NR gNB controls multiple cells. In order to implement ultrahigh-speed data transfer beyond the current LTE, the next-generation mobile communication system may have a wider bandwidth than the existing maximum bandwidth, may employ an orthogonal frequency division multiplexing (hereinafter referred to as OFDM) as a radio access technology, and may additionally integrate a beamforming technology therewith. Furthermore, the next-generation mobile communication system employs an adaptive modulation & coding (hereinafter referred to as AMC) scheme for determining a modulation scheme and a channel coding rate according to a channel state of a UE. The NR CN 3-05 performs functions such as mobility support, bearer configuration, and QoS configuration. The NR CN is a device responsible for various control functions as well as a mobility management function for a UE, and is connected to multiple base stations. In addition, the next-generation mobile communication system may interwork with the existing LTE system, and the NR CN is connected to an MME 3-25 via a network interface. The MME is connected to an eNB 3-30 that is an existing base station.

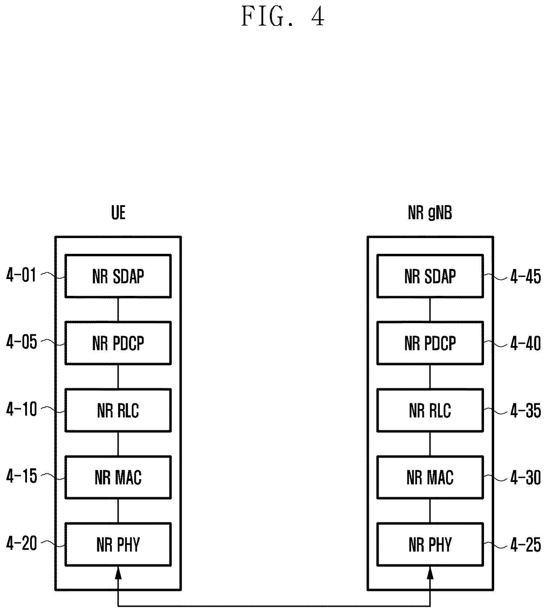

FIG. 4 illustrates a radio protocol structure of a next-generation mobile communication system according to an embodiment of the disclosure.

FIG. 4 illustrates a radio protocol structure of a next-generation mobile communication system to which the disclosure is applicable.

Referring to FIG. 4, a radio protocol of a next-generation mobile communication system includes an NR SDAP 4-01 or 4-45, an NR PDCP 4-05 or 4-40, an NR RLC 4-10 or 4-35, and an NR MAC 4-15 or 4-30 on each of UE and NR base station sides.

The main functions of the NR SDAP 4-01 or 4-45 may include some of functions below.
- Transfer of user plane data
- Mapping between a QoS flow and a DRB for both DL and UL
- Marking QoS flow ID in both DL and UL packets
- Reflective QoS flow to DRB mapping for UL SDAP PDUs

With regard to the SDAP layer device, the UE may be configured, through an RRC message, whether to use the header of the SDAP layer device or whether to use functions of the SDAP layer device for each PDCP layer device or each bearer or each logical channel, and if an SDAP header is configured, the non-access stratum (NAS) QoS reflection configuration 1-bit indicator (NAS reflective QoS) and the AS QoS reflection configuration 1-bit indicator (AS reflective QoS) of the SDAP header may be indicated so that the UE can update or reconfigure mapping information regarding the QoS flow and data bearer of the uplink and downlink. The SDAP header may include QoS flow ID information indicating the QoS. The QoS information may be used as data processing priority, scheduling information, etc. for smoothly supporting services.

The main functions of the NR PDCP 4-05 or 4-40 may include some of functions below.
- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

The reordering of the NR PDCP device refers to a function of reordering PDCP PDU received from a lower layer in an order based on PDCP sequence numbers (SNs), and may include a function of transferring data to an upper layer according to a rearranged order, may include a function of directly transferring data without considering order, may include a function of rearranging order to record lost PDCP PDUs, may include a function of reporting the state of lost PDCP PDUs to a transmission side, or may include a function of requesting retransmission of lost PDCP PDUs.

The main functions of the NR RLC 4-10 or 4-35 may include some of functions below.
- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

The in-sequence delivery of the NR RLC device refers to a function of transferring RLC SDUs received from a lower layer to a higher layer in sequence, and may include a function of, if one original RLC SDU is divided into several RLC SDUs and then the RLC SDUs are received, reassembling the several RLC SDUs and transferring the reassembled RLC SDUs, may include a function of rearranging received RLC PDUs with reference to RLC sequence numbers (SNs) or PDCP sequence numbers (SNs), may include a function of rearranging order to record lost RLC PDUs, may include a function of reporting the state of lost RLC PDUs to a transmission side, may include a function of requesting retransmission of lost RLC PDUs, may include a function of, if there is a lost RLC SDU, sequentially transferring only RLC SDUs before the lost RLC SDU to an upper layer, may include a function of, although there is a lost RLC SDU, if a predetermined timer has expired, sequentially transferring, to an upper layer, all the RLC SDUs received before the timer is started, or may include a function of, although there is a lost RLC SDU, if a predetermined timer has expired, sequentially transferring all the RLC SDUs received up to the current, to an upper layer. In addition, the in-sequence delivery of the NR RLC device may include a function of processing RLC PDUs in the received order (regardless of the sequence number order, in the order of arrival) and delivering same to the PDCP device regardless of the order (out-of-sequence delivery), and may include a function of, in the case of segments, receiving segments which are stored in a buffer or which are to be received later, reconfiguring same into one complete RLC PDU, processing, and delivering same to the PDCP device. The NR RLC layer may include no concatenation function, which may be performed in the NR MAC layer or replaced with a multiplexing function of the NR MAC layer.

The out-of-sequence delivery of the NR RLC device refers to a function of instantly delivering RLC SDUs received from the lower layer to the upper layer regardless of the order, may include a function of, if multiple RLC SDUs received, into which one original RLC SDU has been segmented, are received, reassembling and delivering the same, and may include a function of storing the RLC SN or PDCP SN of received RLC PDUs, and recording RLC PDUs lost as a result of reordering.

The NR MAC 14-15 or 4-30 may be connected to multiple NR RLC layer devices configured in one UE, and the main functions of the NR MAC may include some of functions below.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

An NR PHY layer 4-20 or 4-25 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

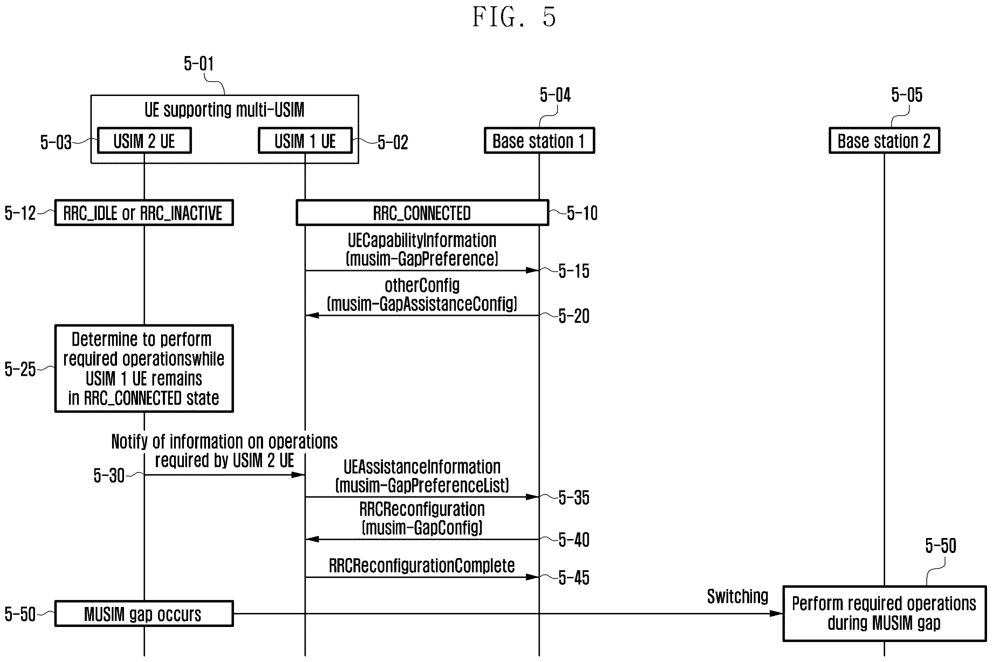

FIG. 5 illustrates that a UE (multi-USIM UE, hereinafter referred to as a MUSIM UE) supporting multiple universal subscriber identity modules (USIMs), while maintaining an RRC connected mode (RRC_CONNECTED) with a base station associated with one USIM, performs an operation associated with another USIM, according to an embodiment of the disclosure.

A MUSIM UE 5-01 according to an embodiment of the disclosure may refer to a UE supporting two or more USIMs. In the disclosure, for convenience of description, a dual-USIM UE supporting two USIMs is assumed, but the scope of the disclosure is not limited to two USIMs, and the disclosure may be applied to a UE supporting two or more USIMs. In an example, the dual-USIM UE may transmit a signal to a base station associated with one USIM at a given time, or may transmit signals to base stations associated with respective USIMs. Similarly, the dual-USIM UE may receive a signal from a base station associated with one USIM at a given time, or simultaneously receive signals from base stations associated with respective USIMs.

Referring to FIG. 5, the MUSIM UE 5-01 may refer to a UE supporting multiple USIMs in one device. For example, a MUSIM UE may refer to a USIM 1 UE 5-02 when operating on USIM 1, and may refer to a USIM 2 UE 5-03 when operating on USIM 2. A base station associated with each USIM may not recognize the MUSIM UE as a single UE, but instead may recognize it as a separate UE corresponding to each USIM. For example, base station 1 5-04 may recognize the USIM 1 UE 5-02 as one UE, and base station 2 5-05 may recognize the USIM 2 UE 5-03 as one UE.

In the following embodiments of the disclosure, for convenience of description, when a MUSIM UE communicates by using USIM 1, the MUSIM UE is referred to as a USIM 1 UE, and when the MUSIM UE communicates by using USIM 2, the MUSIM UE is referred to as a USIM 2 UE. For example, the MUSIM UE may be a USIM 1 UE or a USIM 2 UE, depending on the used USIM among USIM 1 and USIM 2.

In step 5-10, the USIM 1 UE 5-02 may establish an RRC connection with the base station 1 5-04 and be in an RRC connected mode (RRC_CONNECTED). In contrast, in step 5-12, the USIM 2 UE 5-03 may not establish an RRC connection with the base station 2 5-05, and thus may be in an RRC idle mode (RRC_IDLE) or an RRC inactive mode (RRC_INACTIVE). In addition, an embodiment of the disclosure may be equally applied even when the USIM 2 UE 5-03 establishes an RRC connection with the base station 2 5-05 and is in the RRC connected mode (RRC_CONNECTED).

In step 5-15, the USIM 1 UE 5-02 may transmit a UE capability information message (UECapabilityInformation) to the base station 1 5-04. The UE capability information message may include the following information.
- An indicator (musim-GapPreference) indicating whether or not the USIM 1 UE 5-02 may transmit a MUSIM gap preference and a MUSIM gap configuration related thereto to the base station 1 5-04 as MUSIM assistance information. The UE supporting the capability may support a specific number of periodic gaps and aperiodic gaps. For example, the UE supporting the capability may support three periodic gaps and one aperiodic gap.

In the disclosure, the term "MUSIM gap" may refer to a time interval or time pattern in which a network corresponding to a specific USIM of a MUSIM UE configures the MUSIM UE so that the MUSIM UE may perform operations related to cell identification and measurement, paging monitoring, SIB acquisition, and/or on-demand SI request with respect to a cell (target cell) of a network (target network) corresponding to another USIM during a predetermined period of time.

In step 5-20, the base station 1 5-04 may transmit a predetermined RRC message (for example, an RRCReconfiguration message) including configuration information (musim-GapAssistanceConfig) indicating the USIM 1 UE 5-02 to report MUSIM gap information preferred/required for a MUSIM operation. Additionally, the musim-GapAssistanceConfig may be included in an otherConfig field in the RRC message. The musim-GapAssistanceConfig may include the following information.
- musim-GapProhibitTimer value
   ■ When the base station 1 5-04 configures or sets up a newly defined prohibit timer value for the USIM 1 UE 5-02, the USIM 1 UE 5-02 may operate a timer by using the configured prohibit timer value when initiating a procedure for transmitting preferred MUSIM gap configuration information to the base station 1 5-04. In an example, while the timer is running, the USIM 1 UE 5-02 may be unable to transmit a predetermined RRC message including MUSIM gap configuration information preferred by the USIM 1 UE 5-02 to the base station 1 5-04. In addition, when the new timer is not running or has expired, the USIM 1 UE 5-02 may transmit a predetermined RRC message (for example, UEAssistanceInformation) including MUSIM gap configuration information preferred by the USIM 1 UE 5-02 to the base station 1 5-04.

In step 5-25, the USIM 2 UE 5-03 may determine whether to perform a predetermined operation, or whether the USIM 2 UE is required to perform the predetermined operation, in the RRC idle mode or the RRC inactive mode. The predetermined operation is an operation related to the base station 2 5-05 and performed by the USIM 2 UE 5-03, and may refer to at least one of the following or a combination thereof.
- Operation 1: The USIM 2 UE 5-03 may not perform an RRC connection establishment procedure or an RRC connection resume procedure with the base station 2 5-05, but may perform an operation of receiving a signal transmitted by the base station 2 5-05 or an internal operation of the USIM 2 UE through the reception. For example:
   ■ The USIM 2 UE 5-03 may monitor a paging channel or a short message associated with the base station 2 5-05. For example, the USIM 2 UE 5-03 may monitor a paging occasion at each discontinuous reception (DRX) cycle.
   ■ The USIM 2 UE 5-03 may perform monitoring for receiving a system information change notification associated with the base station 2 5-05. For example, the USIM 2 UE 5-03 may monitor a paging occasion at each discontinuous reception (DRX) cycle.
   ■ The USIM 2 UE 5-03 may perform a cell selection or cell reselection evaluation procedure. For example, the USIM 2 UE 5-03 may perform serving cell or neighboring cell measurement as a part of the cell selection or cell reselection evaluation procedure.
   ■ The USIM 2 UE 5-03 may perform a public land mobile network (PLMN) selection procedure.
- Operation 2: The USIM 2 UE 5-03 may not perform an RRC connection establishment procedure or an RRC connection resume procedure with the base station 2 5-05, but may transmit and receive a signal to and from the base station 2 5-05. For example:
   ■ The USIM 2 UE 5-03 may request on-demand system information, which is for acquiring system information, from the base station 2 5-05 or in an on-demand scheme.
- Operation 3: The USIM 2 UE 5-03 in the RRC inactive mode may perform an RRC connection resumption procedure with the base station 2 5-05, but may not be able to transition to the RRC connected mode. For example:
   ■ The USIM 2 UE 5-03 may receive a radio access network (RAN) paging message transmitted by the base station 2 5-05, and the received RAN paging message may include a UE identifier (I-RNTI) indicating the USIM 2 UE 5-03, but the USIM 1 UE 5-02 may need to continue data transmission and reception with the base station 1 5-04. In this case, the USIM 2 UE 5-03 may transmit, to the base station 2 5-05, a message (for example, RRCResumeRequest or RRCResumeRequest1) including an indicator (busy indication) indicating that the USIM 2 UE is unable to respond to the RAN paging message received from the base station 2 5-05. Here, the busy indication may be included in a resumeCause field included in the message. In response thereto, the base station 2 5-05 may transmit an RRCReject or RRCRelease message to the USIM 2 UE 5-03.
- Operation 4: The USIM 2 UE 5-03 may perform an RRC connection establishment or resume procedure with the base station 2 5-05 to perform an operation capable of transitioning to the RRC connected mode. For example:
   ■ The USIM 2 UE 5-03 may perform a registration update procedure or a RAN notification area update procedure.

The operations 1 to 4 described above may be periodic operations or aperiodic operations, or may indicate one-time operations.

In step 5-30, the USIM 2 UE 5-03 may notify the USIM 1 UE 5-02 of information necessary to perform the above-described operation in step 5-25 in the RRC idle mode or the RRC inactive mode. Step 5-30 may be performed depending on the implementation of the MUSIM UE 5-01.

In step 5-35, the USIM 1 UE 5-02 may transmit, to the base station 1 5-04, a predetermined RRC message (for example, a UEAssistanceInformation message) including configuration information (MUSIM-GapPreferenceList) for one or multiple preferred MUSIM gap patterns. The MUSIM-GapPreferenceList may include information having an ASN.1 structure according to Table 1 below.

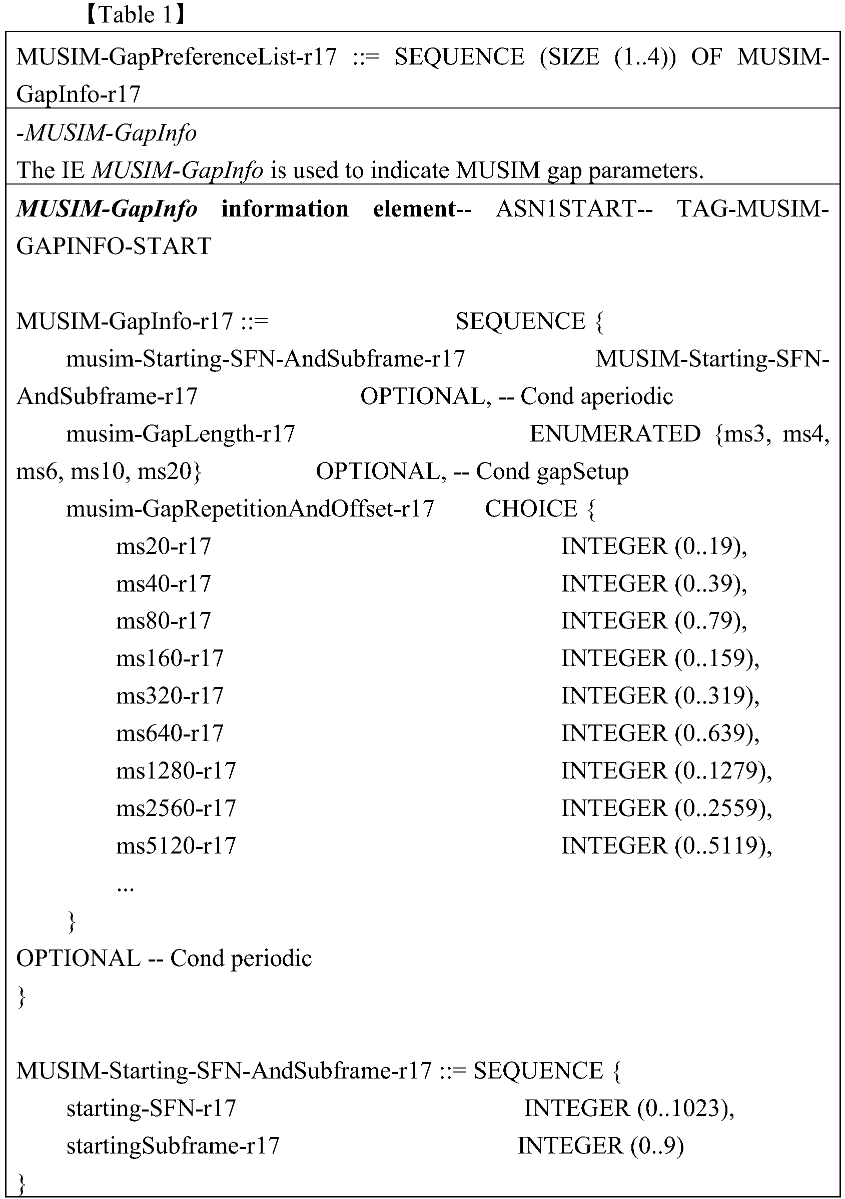

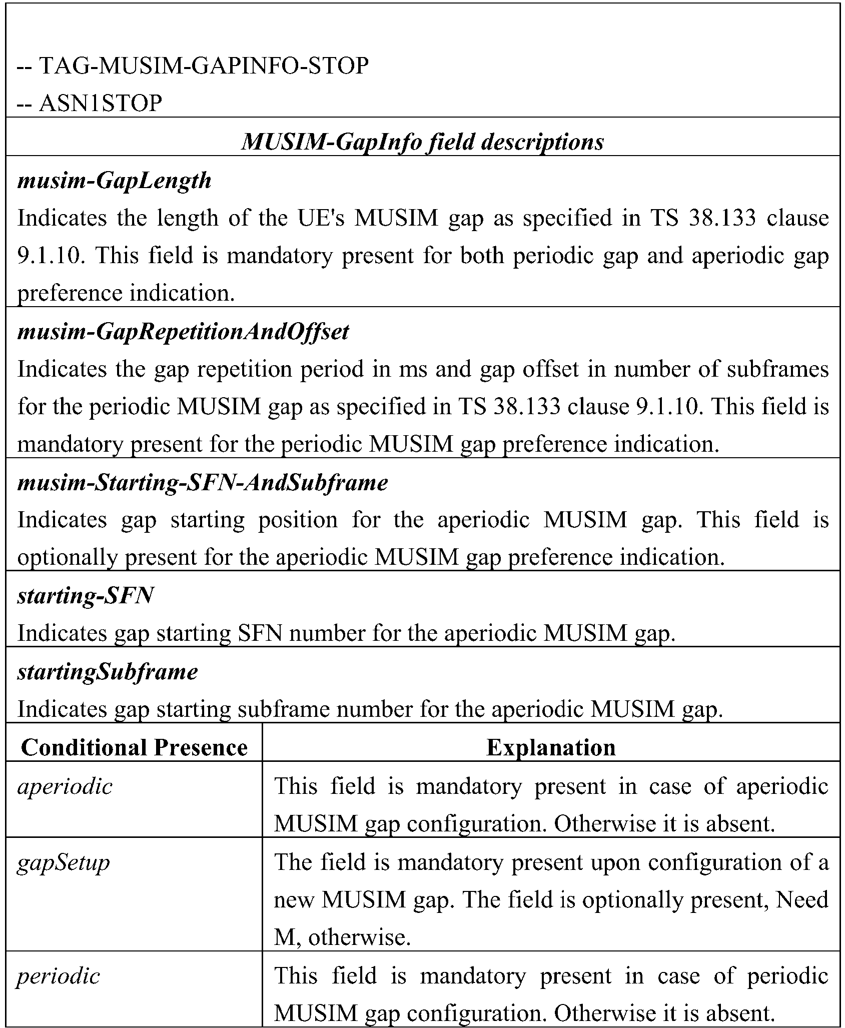

In step 5-35, the USIM 1 UE 5-02 may transmit a predetermined RRC message including musim-GapPreferenceList to the base station 1 5-04. In an example, a condition for initiating an operation in which the USIM 1 UE 5-02 transmits a predetermined RRC message including musim-GapPreferenceList to the base station 1 5-04 may be expressed as shown in Tables 2 to 4 below. Unless otherwise specified, reference may be made to the 3GPP specification TS 38.331.

**[Table 2]**

| |
|---|
| Initiation |
| 1> if configured to provide MUSIM assistance information for gap preference: |
| 2> if the UE has a preference on the MUSIM gap(s) and the UE did not transmit a *UEAssistanceInformation* message with *musim-GapPreferenceList* since it was configured to provide MUSIM assistance information for gap preference; or |
| 2> if the current *musim-GapPreferenceList* is different from the one indicated in the last transmission of the *UEAssistanceInformation* message including *musim-GapPreferenceList* and the timer T346h is not running: |
| 3> initiate transmission of the *UEAssistanceInformation* message in accordance with 5.7.4.3 to provide the current *musim-GapPreferenceList*; |
| 3> start or restart the timer T346h with the timer value set to the *musim-GapProhibitTimer.* |
| NOTE: The UE does not need to initiate transmission of the *UEAssistanceInformation* message if the difference between the current *musim-GapPreferenceList* and the last transmission of the *UEAssistanceInformation* message including *musim-GapPreferenceList* is only due to removal of an ended aperiodic gap. |

**[Table 3]**

| |
|---|
| Actions related to transmission of *UEAssistanceInformation* message |
| 1> if transmission of the *UEAssistanceInformation* message is initiated to provide MUSIM assistance information according to 5.7.4.2 or 5.3.5.3: |
| 2> if the UE has a preference for MUSIM periodic gap(s): |
| 3> include *musim-GapPreferenceList* with an entry for each periodic gap the UE prefers to be configured; |
| 4> set *musim-GapLength* and *musim-GapRepetitionAndOffset* in the *musim-GapInfo* IE to the values of the length and the repetition/offset of the gap(s), respectively, the UE prefers to be configured with; |
| 2> if the UE has a preference for MUSIM aperiodic gap: |
| 3> include the field *musim-GapPreferenceList,* with one entry for the aperiodic gap the UE prefers to be configured; |
| 4> include *musim-GapLength* in the *musim-GapInfo* IE and set it to the values of the length of the gap the UE prefers to be configured with; |
| 4> optionally include *musim-Starting-SFN-AndSubframe* in the *musim-GapInfo* IE and set it to the starting SFN/subframe of the gap the UE prefers to be configured with; |
| 2> if the UE has no longer preference for the periodic/aperiodic gaps: |
| 3> do not include *musim-GapPreferenceList* in the *musim-Assistance* IE; |

**[Table 4]**

| |
|---|
| Reception of an *RRCReconfiguration* by the UE |
| 1> if *reconfigurationWithSync* was included in *spCellConfig* of an MCG or SCG, and when MAC of an NR cell group successfully completes a Random Access procedure triggered above: |
| 2> stop timer T304 for that cell group; |
| 2> stop timer T310 for source SpCell if running; |
| 2> apply the parts of the CSI reporting configuration, the scheduling request configuration and the sounding RS configuration that do not require the UE to know the SFN of the respective target SpCell, if any; |
| 2> apply the parts of the measurement and the radio resource configuration that require the UE to know the SFN of the respective target SpCell (e.g. measurement gaps, periodic CQI reporting, scheduling request configuration, sounding RS configuration), if any, upon acquiring the SFN of that target SpCell; |
| 2> for each DRB configured as DAPS bearer, request uplink data switching to the PDCP entity, as specified in TS 38.323; |
| 2> if the *reconfigurationWithSync* was included in *spCellConfig* of an MCG: |
| 3> if T390 is running: |
| 4> stop timer T390 for all access categories; |
| 4> perform the actions as specified in 5.3.14.4. |
| 3> if T350 is running: |
| 4> stop timer T350; |
| 3> if *RRCReconfiguration* does not include *dedicatedSIB1-Delivery* and |
| 3> if the active downlink BWP, which is indicated by the *firstActiveDownlinkBWP-Id* for the target SpCell of the MCG, has a common search space configured by *searchSpaceSIB1:* |
| 4> acquire the *SIB1,* which is scheduled as specified in TS 38.213, of the target SpCell of the MCG; |
| 4> upon acquiring *SIB1,* perform the actions specified in clause 5.2.2.4.2; |
| 2> if the *reconfigurationWithSync* was included in *spCellConfig* of an MCG; or |
| 2> if the *reconfigurationWithSync* was included in *spCellConfig* of an SCG and the CPA or CPC was configured |
| 3> remove all the entries within *VarConditionalReconfig,* if any; |
| 3> remove all the entries within *VarConditionalReconfiguration* as specified in TS 36.331, clause 5.3.5.9.6, if any; |
| 3> for each *measId* of the source SpCell configuration, if the associated *reportConfig* has a *reportType* set to *condTriggerConfig*: |
| 4> for the associated *reportConfigId*: |
| 5> remove the entry with the matching *reportConfigId* from the *reportConfigList* within the *VarMeasConfig*; |
| 4> if the associated *measObjectId* is only associated to a *reportConfig* with *reportType* set to *condTriggerConfig*: |
| 5> remove the entry with the matching *measObjectId* from the *measObjectList* within the *VarMeasConfig*; |
| 4> remove the entry with the matching *measId* from the *measIdList* within the *VarMeasConfig*; |
| 2> if *reconfigurationWithSync* was included in *masterCellGroup* or *secondaryCellGroup:* |
| 3> if the UE initiated transmission of a *UEAssistanceInformation* message for the corresponding cell group during the last 1 second, and the UE is still configured to provide the concerned UE assistance information for the corresponding cell group; or |
| 3> if the *RRCReconfiguration* message is applied due to a conditional reconfiguration execution, and the UE is configured to provide UE assistance information for the corresponding cell group, and the UE has initiated transmission of a *UEAssistanceInformation* message for the corresponding cell group since it was configured to do so in accordance with 5.7.4.2: |
| 4> initiate transmission of a *UEAssistanceInformation* message for the corresponding cell group in accordance with clause 5.7.4.3 to provide the concerned UE assistance information; |
| 4> start or restart the prohibit timer (if exists) or the leave without |
| response timer for the MUSIM associated with the concerned UE assistance information with the timer value set to the value in corresponding configuration; |

In step 5-40, in response to step 5-35, the base station 1 5-04 may transmit a predetermined RRC message (for example, RRCReconfiguration) including one or multiple MUSIM gap configurations (musim-GapConfig(s)), based on the musim-GapPreferenceList requested by the USIM 1 UE 5-02. The musim-GapConfig may include information having an ASN.1 structure according to Table 5 below.

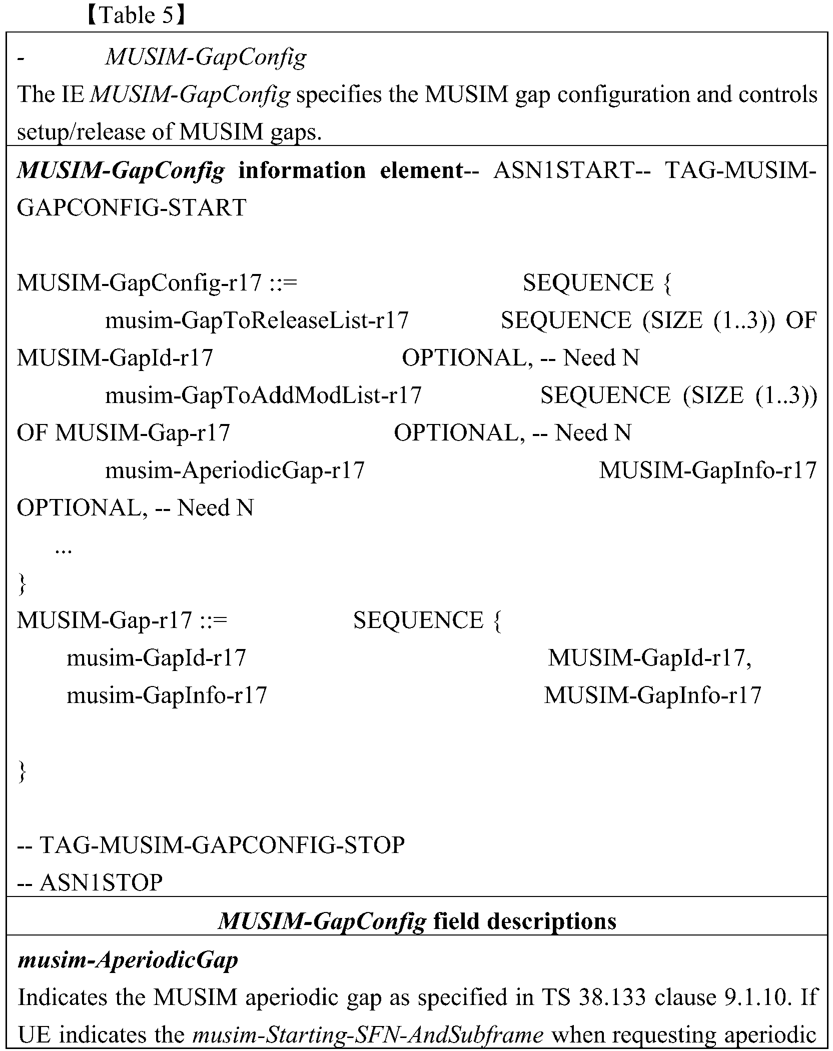

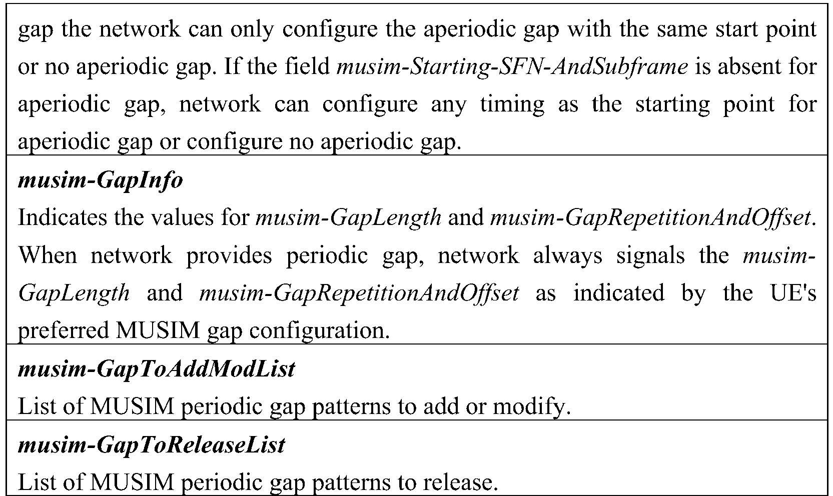

In step 5-45, the USIM 1 UE 5-02 may transmit a predetermined RRC message (for example, RRCReconfigurationComplete) to the base station 1 5-04 in response to the predetermined RRC message received in step 5-40.

In step 5-50, when each MUSIM gap occurs according to the MUSIM gap configuration received in step 5-40, the USIM 2 UE 5-03 may perform at least one of the operations in the step 5-25 described above. In this case, the USIM 1 UE 5-02 may maintain the RRC connected mode with the base station 1 5-04.

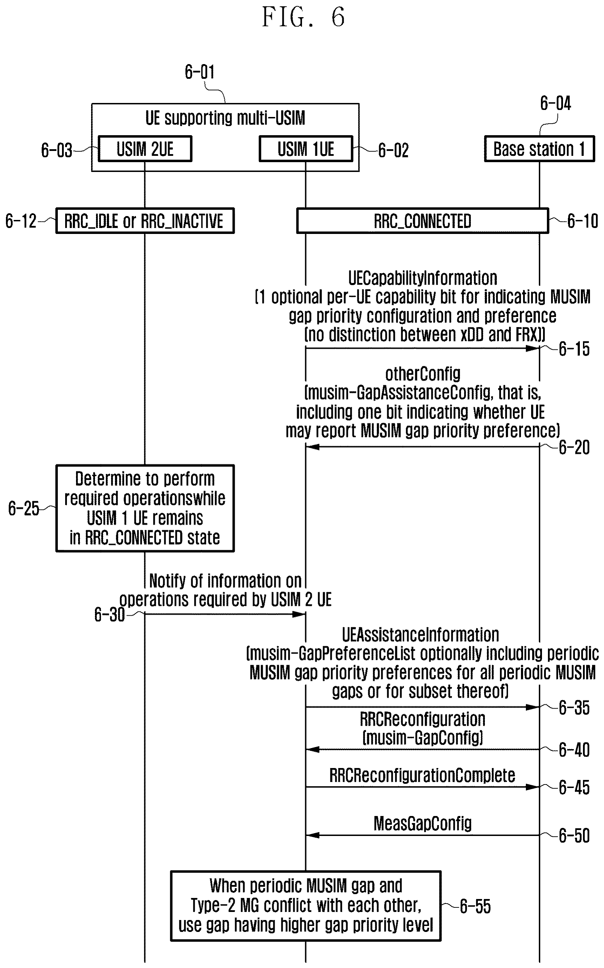

FIG. 6 illustrates that a UE (multi-USIM UE, hereinafter referred to as a MUSIM UE) supporting multiple universal subscriber identity modules (USIMs), while maintaining an RRC connected mode (RRC_CONNECTED) with a base station associated with one USIM, performs an operation associated with another USIM, according to an embodiment of the disclosure.

A MUSIM UE 6-01 according to an embodiment of the disclosure may refer to a UE supporting two or more USIMs. In the disclosure, for convenience of description, a dual-USIM UE supporting two USIMs is assumed, but the scope of the disclosure is not limited to two USIMs, and the disclosure may be applied to a UE supporting two or more USIMs. The dual-USIM UE may transmit a signal to a base station associated with one USIM at a given time, or may transmit signals to base stations associated with respective USIMs. Similarly, the dual-USIM UE may receive a signal from a base station associated with one USIM at a given time, or simultaneously receive signals from base stations associated with respective USIMs.

Referring to FIG. 6, the MUSIM UE 6-01 may refer to a UE supporting multiple USIMs in one device. For example, a MUSIM UE may refer to a USIM 1 UE 6-02 when operating on USIM 1, and may refer to a USIM 2 UE 6-03 when operating on USIM 2. A base station associated with each USIM may not recognize the MUSIM UE as a single UE, but instead may recognize it as a separate UE corresponding to each USIM. For example, base station 1 6-04 may recognize the USIM 1 UE 6-02 as one UE, and base station 2 (not shown) may recognize the USIM 2 UE 6-03 as one UE. In the following embodiments of the disclosure, for convenience of description, when a MUSIM UE communicates by using USIM 1, the MUSIM UE is referred to as a USIM 1 UE, and when the MUSIM UE communicates by using USIM 2, the MUSIM UE is referred to as a USIM 2 UE. That is, the MUSIM UE may be a USIM 1 UE or a USIM 2 UE depending on the used USIM among USIM 1 and USIM 2.

In step 6-10, the USIM 1 UE 6-02 may establish an RRC connection with the base station 1 6-04 and be in an RRC connected mode (RRC_CONNECTED). In contrast, in step 6-12, the USIM 2 UE 6-03 may not establish an RRC connection with the base station 2 (not shown), and thus may be in an RRC idle mode (RRC_IDLE) or an RRC inactive mode (RRC_INACTIVE). In addition, an embodiment of the disclosure may be equally applied even when the USIM 2 UE 6-03 establishes an RRC connection with the base station 2 (not shown) and is in the RRC connected mode (RRC_CONNECTED).

In step 6-15, the USIM 1 UE 6-02 may transmit a UE capability information message (UECapabilityInformation) to the base station 1 6-04. Step 6-15 may follow the step 5-15 described above. Additionally, the UE capability information message may further include the following information.
- An indicator indicating whether the USIM 1 UE 6-02 supports a MUSIM gap priority configuration and preference for the base station 1 6-04: In an example, the indicator is a 1-bit indicator, is a UE-specific (per UE) capability indicator, and may not differentiate between xDD/FRx (1 optional per-UE capability bit (without xDD/FRx differentiation) to indicate MUSIM gap priority configuration and preference). The UE may support the capability indicator when the UE supports the UE capability (that is, musim-GapPreference) of the above-described embodiment.

In step 6-20, the base station 1 6-04 may transmit a predetermined RRC message (for example, an RRCReconfiguration message) including configuration information (musim-GapAssistanceConfig) indicating the USIM 1 UE 6-02 to report MUSIM gap information preferred/required for a MUSIM operation. Additionally, the musim-GapAssistanceConfig may be included in otherConfig. This may follow the step 5-20 described above. Additionally, in the disclosure, the musim-GapAssistanceConfig may include at least one of the following pieces of information.
- An indicator indicating the UE to report priority information (for example, which may be referred to as a gap priority) of a preferred gap pattern
   ■ The UE may report a gap priority preferred by the UE to the base station only when the indicator is included in the musim-GapAssistanceConfig. This can reduce unnecessary signaling overhead since, if the base station cannot interpret the gap priority preferred by the UE, the base station may not include the indicator in the musim-GapAssistanceConfig, so that the UE may not report it.

In step 6-25, the USIM 2 UE 6-03 may determine whether to perform a predetermined operation, or whether the USIM 2 UE is required to perform the predetermined operation, in the RRC idle mode or the RRC inactive mode. Step 6-25 may follow the step 5-25 described above.

In step 6-30, the USIM 2 UE 6-03 may notify the USIM 1 UE 6-02 of information necessary to perform the operation in step 6-25 in the RRC idle mode or the RRC inactive mode. Step 6-30 may follow the step 5-30 described above.

In step 6-35, the USIM 1 UE 6-02 may transmit, to the base station 1 6-04, a predetermined RRC message (for example, a UEAssistanceInformation message) including configuration information (musim-GapPreferenceList) for one or multiple preferred MUSIM gap patterns. Step 6-35 may follow the step 5-35 described above.

Additionally, due to step 6-30, the UE may include a gap priority preferred for each MUSIM gap pattern in the UEAssistanceInformation message. In the disclosure, for convenience of description, a periodic MUSIM gap pattern is described, but the contents described below may be equally applied to an aperiodic MUSIM gap as well. The UE may consider and set a gap priority between MUSIM gap patterns for all preferred periodic MUSIM gap patterns or for some periodic MUSIM gap patterns. For example, for three periodic MUSIM gap patterns, the gap priority may be configured as information capable of indicating low, medium, or high, by considering relative priorities. In addition, two or more periodic MUSIM gap patterns may be configured to the same gap priority. The gap priority may be represented as one integer value in order to indicate the above-described content, or may be represented as a high, medium, or low gap priority.

In step 6-40, in response to step 6-35, the base station 1 6-04 may transmit a predetermined RRC message (for example, RRCReconfiguration) including one or multiple MUSIM gap configurations (musim-GapConfig(s)), based on the musim-GapPreferenceList requested by the USIM 1 UE 6-02. Step 6-40 may follow the step 5-40 described above. Additionally, in an embodiment of the disclosure, the base station may configure a periodic MUSIM gap for the UE by at least one of the following methods, or a combination thereof.
- Method 1: Even when the UE does not have preferred gap priority information for a specific periodic MUSIM gap, the base station may configure gap priorities for all periodic MUSIM gaps configured for the UE through a parameter (e.g., GapPriority-r17) included in MUSIM gap configuration information (musim-GapConfig).
- Method 2: When the UE does not have preferred priority information for a specific periodic MUSIM gap, the base station may configure, through GapPriority-r17, a priority for a corresponding gap to be lower than, or lower than or equal to a preferred gap priority value transmitted by the UE. Alternatively, when the UE does not have preferred priority information for a specific periodic MUSIM gap, the base station may configure, through GapPriority-r17, a priority for a corresponding gap to be lower than, or lower than or equal to that of a Type-2 measurement gap (MG) described later.
- Method 3: When the UE does not have preferred priority information for a periodic MUSIM gap, the base station may not configure GapPriority-r17 for a corresponding gap. In this case, the UE may always consider the priority of the corresponding gap to be lower than that of a gap (MUSIM gap or Type-2 MG) for which GapPriority-r17 is configured.

In an example, GapPriority-r17 may be configured as one of integer values from 1 to 16, where a value of 1 may indicate the highest priority, and a value of 2 may indicate the next priority.

In step 6-45, the USIM 1 UE 6-02 may transmit a predetermined RRC message to the base station 1 6-04 in response to the predetermined RRC message received in step 6-40. For example, the predetermined RRC message may indicate RRCReconfigurationComplete.

In step 6-50, the base station 1 6-04 may transmit a predetermined RRC message (for example, an RRCReconfiguration message) including measurement gap configuration information (MeasGapConfig) to the USIM 1 UE 6-02. In the disclosure, the term "measurement gap" may refer to a time interval in which the UE suspends signal transmission and reception with a serving cell and measures a neighboring cell of a different frequency or a different radio access technology (RAT). The MeasGapConfig may include one or multiple gap configuration(s) (GapConfig-r17 IE(s)). In addition, the predetermined RRC message (for example, the RRCReconfiguration message) including the MeasGapConfig is not limited to the order illustrated in this drawing. For example, the message of step 6-50 may be transmitted before a time point at which the message of step 6-40 is transmitted. In addition, the base station 1 6-04 may transmit one message (for example, an RRCReconfiguration message) including both the musim-GapConfig and the MeasGapConfig.

Specifically, GapConfig-r17 may have an ASN.1 structure as shown in Table 6 below.

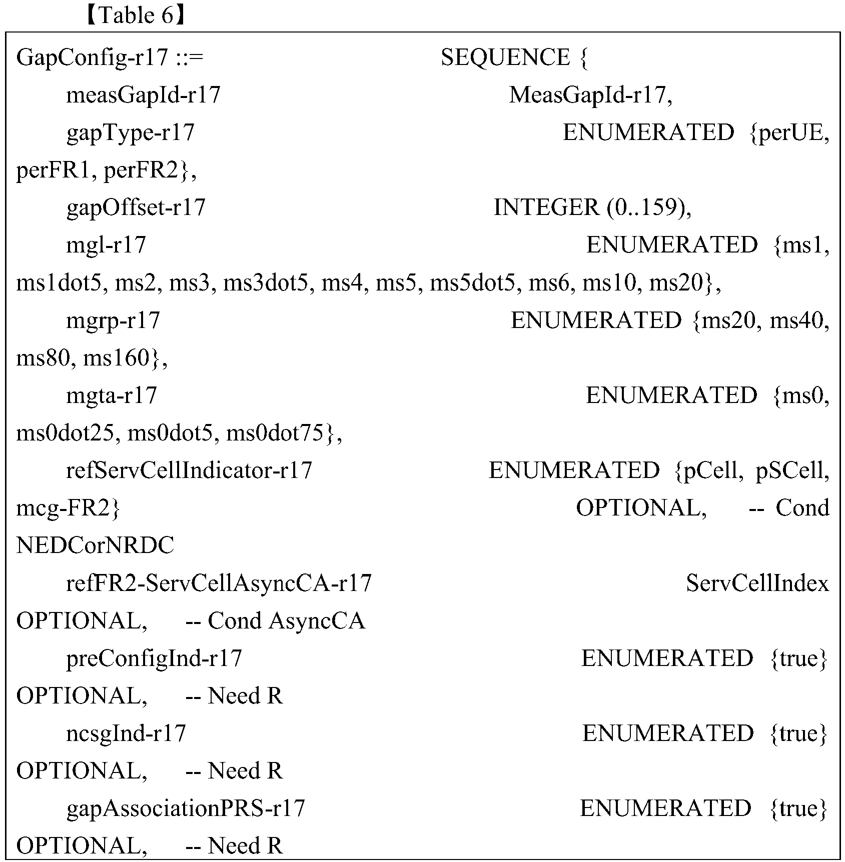

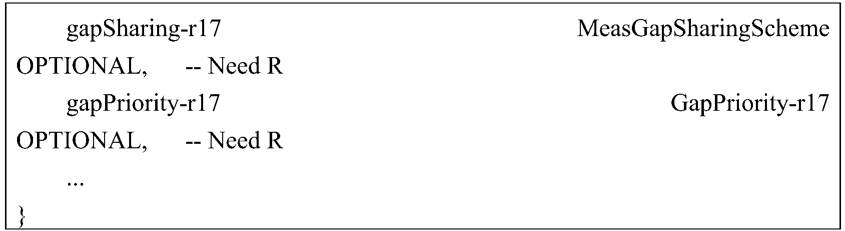

In the disclosure, a Type-2 MG may refer to a measurement gap configured by GapConfig-r17, and in this case, the Type-2 MG may indicate that preConfigInd-r17 and ncsgInd-r17 are not configured as true.

In the disclosure, if the preferred gap priority for a specific periodic MUSIM gap reported by the UE in step 6-35 is indicated as high, the base station may configure a gap priority level having a priority lower than that of the periodic MUSIM gap through the GapPriority-r17 included in the gap configuration within the MeasGapConfig when configuring the gap priority for the Type-2 MG. For example, if the base station has configured a value of GapPriority-r17 to 2 for the periodic MUSIM gap through step 6-40, the base station may configure a value of GapPriority-r17 to a value greater than 2 for the Type-2 MG. In this case, when configuring the Type-2 MG for the UE, the base station may directly configure the gap priority without receiving UE assistance information, unlike for a MUSIM gap. Therefore, when the Type-2 MG and the MUSIM gap conflict (for example, when times at which the UE is required to apply the Type-2 MG and the MUSIM gap overlap), the base station does not know which gap the UE prefers. Therefore, when the base station configures GapPriority-r17 for the Type-2 MG according to the method of the disclosure, the UE may perform operations according to a priority when a conflict between the Type-2 MG and the MUSIM gap occurs.

In step 6-55, the USIM 1 UE 6-02 may determine that the configured Type-2 MG and a periodic MUSIM gap overlap or conflict on the time axis. In this case, the UE may apply/use a gap having a higher gap priority. For example, when the MUSIM gap is applied/used, the UE may perform operations required for the USIM 2 UE 6-03, and when the Type-2 MG is applied/used, the USIM 1 UE 6-02 may perform operations required by the base station 6-04.

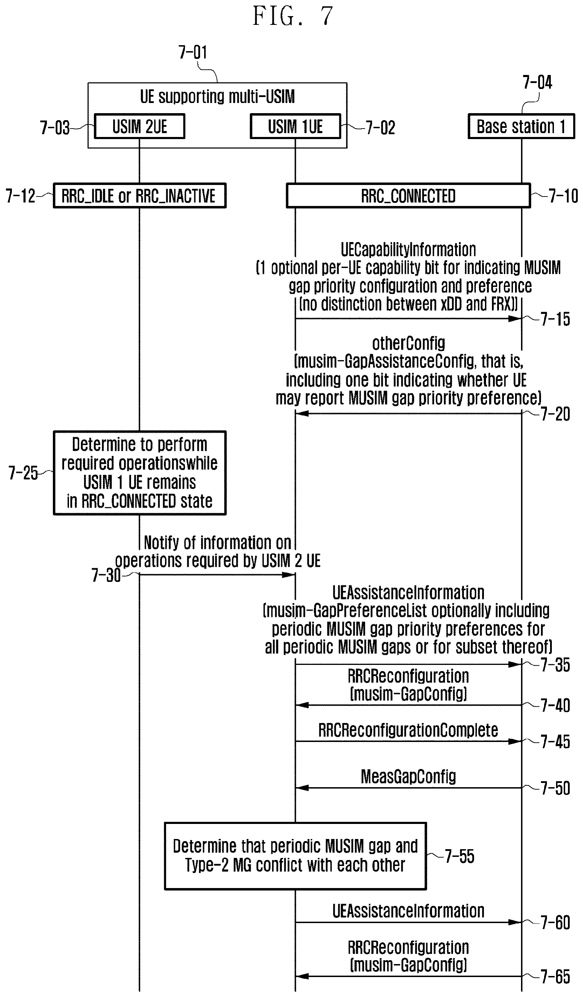

FIG. 7 illustrates that a UE (multi-USIM UE, hereinafter referred to as a MUSIM UE) supporting multiple universal subscriber identity modules (USIMs), while maintaining an RRC connected mode (RRC_CONNECTED) with a base station associated with one USIM, performs an operation associated with another USIM, according to an embodiment of the disclosure.

A MUSIM UE 7-01 according to an embodiment of the disclosure may refer to a UE supporting two or more USIMs. In the disclosure, for convenience of description, a dual-USIM UE supporting two USIMs is assumed, but the scope of the disclosure is not limited to two USIMs, and the disclosure may be applied to a UE supporting two or more USIMs. The dual-USIM UE may transmit a signal to a base station associated with one USIM at a given time, or may transmit signals to base stations associated with respective USIMs. Similarly, the dual-USIM UE has a feature capable of receiving a signal from a base station associated with one USIM at a given time or simultaneously receiving signals from base stations associated with respective USIMs.

Referring to FIG. 7, the MUSIM UE 7-01 may refer to a UE supporting multiple USIMs in one device. For example, a MUSIM UE may refer to a USIM 1 UE 7-02 when operating on USIM 1, and may refer to a USIM 2 UE 7-03 when operating on USIM 2. A base station associated with each USIM may not recognize the MUSIM UE as a single UE, but instead may recognize it as a separate UE corresponding to each USIM. For example, base station 1 7-04 may recognize the USIM 1 UE 7-02 as one UE, and base station 2 (not shown) may recognize the USIM 2 UE 7-03 as one UE. In the following embodiments of the disclosure, for convenience of description, when a MUSIM UE communicates by using USIM 1, the MUSIM UE is referred to as a USIM 1 UE, and when the MUSIM UE communicates by using USIM 2, the MUSIM UE is referred to as a USIM 2 UE. That is, the MUSIM UE may be a USIM 1 UE or a USIM 2 UE depending on the used USIM among USIM 1 and USIM 2.

In step 7-10, the USIM 1 UE 7-02 may establish an RRC connection with the base station 1 7-04 and be in an RRC connected mode (RRC_CONNECTED). In contrast, in step 7-12, the USIM 2 UE 7-03 may not establish an RRC connection with the base station 2 (not shown), and thus may be in an RRC idle mode (RRC_IDLE) or an RRC inactive mode (RRC_INACTIVE). In addition, an embodiment of the disclosure may be equally applied even when the USIM 2 UE 7-03 establishes an RRC connection with the base station 2 (not shown) and is in the RRC connected mode (RRC_CONNECTED).

In step 7-15, the USIM 1 UE 7-02 may transmit a UE capability information message (UECapabilityInformation) to the base station 1 7-04. Step 7-15 may follow at least one of the steps 5-15 and 6-15 described above.

In step 7-20, the base station 1 7-04 may transmit a predetermined RRC message (for example, an RRCReconfiguration message) including configuration information (musim-GapAssistanceConfig) indicating the USIM 1 UE 7-02 to report MUSIM gap information preferred/required for a MUSIM operation. Step 7-20 may follow at least one of the steps 5-20 and 6-20 described above.

In step 7-25, the USIM 2 UE 7-03 may determine whether to perform a predetermined operation, or whether the USIM 2 UE is required to perform the predetermined operation, in the RRC idle mode or the RRC inactive mode. Step 7-25 may follow at least one of the steps 5-25 and 6-25 described above.

In step 7-30, the USIM 2 UE 7-03 may notify the USIM 1 UE 7-02 of information necessary to perform the operation in step 7-25 in the RRC idle mode or the RRC inactive mode. Step 7-30 may follow at least one of the steps 5-30 and 6-30 described above.

In step 7-35, the USIM 1 UE 7-02 may transmit, to the base station 1 7-04, a predetermined RRC message (e.g., a UEAssistanceInformation message) including configuration information (musim-GapPreferenceList) for one or multiple preferred MUSIM gap patterns. Step 7-35 may follow at least one of the steps 5-35 and 6-35 described above.

In step 7-40, in response to step 7-35, the base station 1 7-04 may transmit a predetermined RRC message (for example, RRCReconfiguration) including one or multiple MUSIM gap configurations (musim-GapConfig(s)), based on the musim-GapPreferenceList requested by the USIM 1 UE 7-02. Step 7-40 may follow at least one of the steps 5-40 and 6-40 described above.

In step 7-45, the USIM 1 UE 7-02 may transmit a predetermined RRC message to the base station 1 7-04 in response to the predetermined RRC message received in step 7-40. For example, the predetermined RRC message may indicate RRCReconfigurationComplete.

In step 7-50, the base station 1 7-04 may transmit a predetermined RRC message (for example, an RRCReconfiguration message) including measurement gap configuration information (MeasGapConfig) to the USIM 1 UE 7-02. The description of a measurement gap is given in the description of FIG. 6. The MeasGapConfig may include one or multiple gap configuration(s) (GapConfig-r17 IE(s)). In addition, the predetermined RRC message (for example, the RRCReconfiguration message) including the MeasGapConfig is not limited to the order illustrated in this drawing. For example, the message of step 7-50 may be transmitted before a time point at which the message of step 7-40 is transmitted. In addition, the base station 1 7-04 may transmit one message (for example, an RRCReconfiguration message) including both the musim-GapConfig and the MeasGapConfig.

Specifically, GapConfig-r17 may have an ASN.1 structure as shown in Table 7 below.

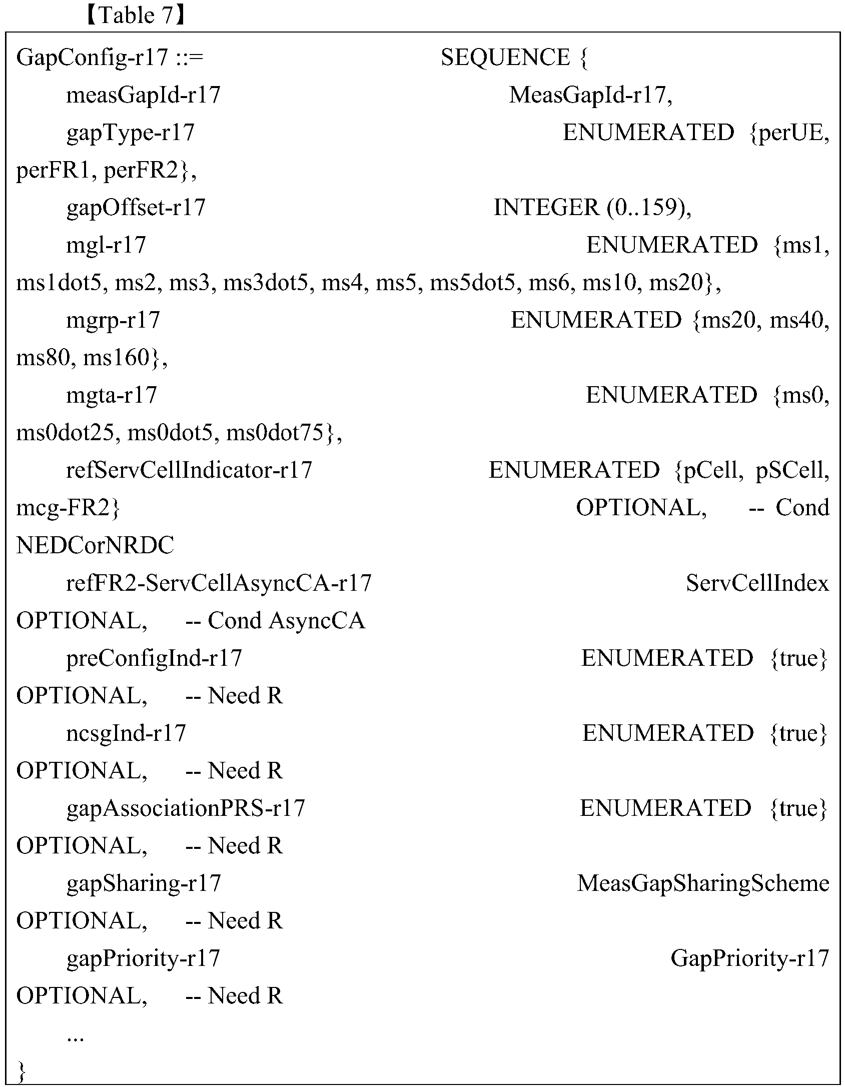

In the disclosure, a Type-2 MG may refer to a gap configured by GapConfig-r17, and in this case, the Type-2 MG may indicate that preConfigInd-r17 and ncsgInd-r17 are not configured as true. In the disclosure, the base station may configure GapPriority-r17 for the Type-2 MG.

In step 7-55, the USIM 1 UE 7-02 may determine that the configured Type-2 MG and a periodic MUSIM gap overlap or conflict on the time axis.

In step 7-60, the USIM 1 UE 7-02 may transmit a UEAssistanceInformation message to the base station 1 7-04 when a gap priority of the periodic MUSIM gap is lower than that of the Type-2 MG but the UE intends to apply the periodic MUSIM gap. For example, the UE may include, in the UEAssistanceInformation message, information indicating a high gap priority preference for the periodic MUSIM gap, or a 1-bit indicator (or, information or an indicator requesting the base station to configure the gap priority of the periodic MUSIM gap to be higher than that of the conflicting Type-2 MG), and transmit the UEAssistanceInformation message to the base station 1 7-04.

In step 7-65, the base station 1 7-04 may transmit the RRC Reconfiguration message including the musim-GapConfig to the USIM 1 UE 7-02. Based on step 7-60, the base station may configure a value of the GapPriority-r17 for the periodic MUSIM gap to be lower than that of the Type-2 MG. Alternatively, the base station may release or modify the Type-2 MG. Therefore, the USIM 1 UE 7-02 may apply/use the periodic MUSIM gap with priority over the Type-2 MG.

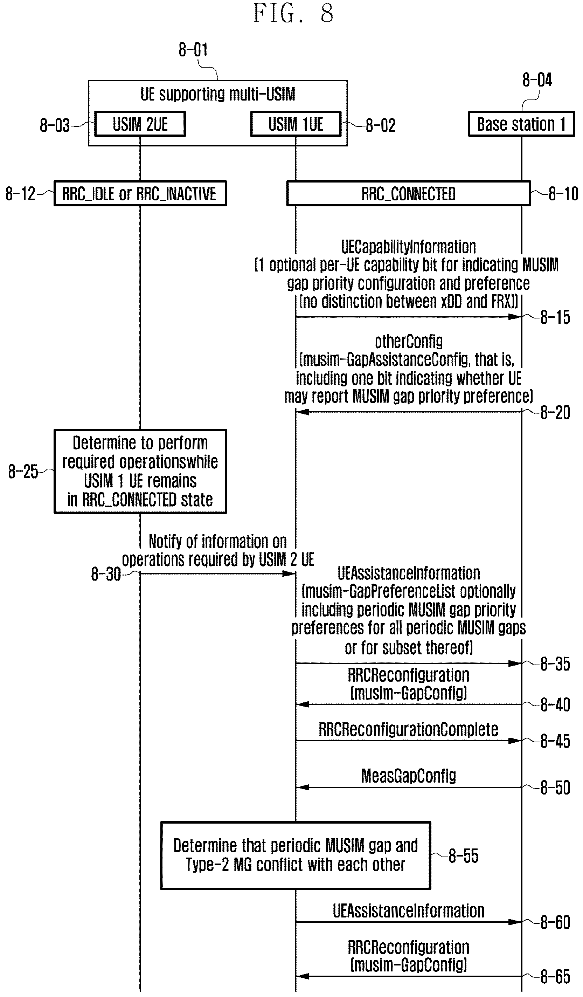

FIG. 8 illustrates that a UE (multi-USIM UE, hereinafter referred to as a MUSIM UE) supporting multiple universal subscriber identity modules (USIMs), while maintaining an RRC connected mode (RRC_CONNECTED) with a base station associated with one USIM, performs an operation associated with another USIM, according to an embodiment of the disclosure.

A MUSIM UE 8-01 according to an embodiment of the disclosure may refer to a UE supporting two or more USIMs. In the disclosure, for convenience of description, a dual-USIM UE supporting two USIMs is assumed, but the scope of the disclosure is not limited to two USIMs, and the disclosure may be applied to a UE supporting two or more USIMs. The dual-USIM UE may transmit a signal to a base station associated with one USIM at a given time, or may transmit signals to base stations associated with respective USIMs. Similarly, the dual-USIM UE has a feature capable of receiving a signal from a base station associated with one USIM at a given time or simultaneously receiving signals from base stations associated with respective USIMs.

Referring to FIG. 8, the MUSIM UE 8-01 may refer to a UE supporting multiple USIMs in one device. For example, a MUSIM UE may refer to a USIM 1 UE 8-02 when operating on USIM 1, and may refer to a USIM 2 UE 8-03 when operating on USIM 2. A base station associated with each USIM may not recognize the MUSIM UE as a single UE, but instead may recognize it as a separate UE corresponding to each USIM. For example, base station 1 8-04 may recognize the USIM 1 UE 8-02 as one UE, and base station 2 (not shown) may recognize the USIM 2 UE 8-03 as one UE. In the following embodiments of the disclosure, for convenience of description, when a MUSIM UE communicates by using USIM 1, the MUSIM UE is referred to as a USIM 1 UE, and when the MUSIM UE communicates by using USIM 2, the MUSIM UE is referred to as a USIM 2 UE. That is, the MUSIM UE may be a USIM 1 UE or a USIM 2 UE depending on the used USIM among USIM 1 and USIM 2.

In step 8-10, the USIM 1 UE 8-02 may establish an RRC connection with the base station 1 8-04 and be in an RRC connected mode (RRC_CONNECTED). In contrast, in step 8-12, the USIM 2 UE 8-03 may not establish an RRC connection with the base station 2 (not shown), and thus may be in an RRC idle mode (RRC_IDLE) or an RRC inactive mode (RRC_INACTIVE). In addition, an embodiment of the disclosure may be equally applied even when the USIM 2 UE 8-03 establishes an RRC connection with the base station 2 (not shown) and is in the RRC connected mode (RRC_CONNECTED).

In step 8-15, the USIM 1 UE 8-02 may transmit a UE capability information message (UECapabilityInformation) to the base station 1 8-04. Step 8-15 may follow at least one of the steps 5-15, 6-15, and 7-15 described above.

In step 8-20, the base station 1 8-04 may transmit a predetermined RRC message (for example, an RRCReconfiguration message) including configuration information (musim-GapAssistanceConfig) indicating the USIM 1 UE 8-02 to report MUSIM gap information preferred/required for a MUSIM operation. Step 8-20 may follow at least one of the steps 5-20, 6-20, and 7-20 described above.

In step 8-25, the USIM 2 UE 8-03 may determine whether the USIM 2 UE is required to perform a predetermined operation in the RRC idle mode or the RRC inactive mode. Step 8-25 may follow at least one of the steps 5-25, 6-25, and 7-25 described above.

In step 8-30, the USIM 2 UE 8-03 may notify the USIM 1 UE 8-02 of information necessary to perform the operation in step 8-25 in the RRC idle mode or the RRC inactive mode. Step 8-30 may follow at least one of the steps 5-30, 6-30, and 7-30 described above.

In step 8-35, the USIM 1 UE 8-02 may transmit, to the base station 1 8-04, a predetermined RRC message (e.g., a UEAssistanceInformation message) including configuration information (musim-GapPreferenceList) for one or multiple preferred MUSIM gap patterns. Step 8-35 may follow at least one of the steps 5-35, 6-35, and 7-35 described above. Additionally, if the UE desires a specific periodic MUSIM gap to be configured with the highest gap priority, the UE may include, in the musim-GapPreferenceList, information indicating that a gap priority for the periodic MUSIM gap is "highest". Alternatively, if the UE desires a specific periodic MUSIM gap to be configured with the lowest gap priority, the UE may include, in the musim-GapPreferenceList, information indicating that a gap priority for the periodic MUSIM gap is "lowest".

In step 8-40, in response to step 8-35, the base station 1 8-04 may transmit a predetermined RRC message (for example, RRCReconfiguration) including one or multiple MUSIM gap configurations (musim-GapConfig(s)), based on the musim-GapPreferenceList requested by the USIM 1 UE 8-02. Step 8-40 may follow at least one of the steps 5-40, 6-40, and 7-40 described above. Additionally, if the base station receives, from the UE, a preferred gap priority indicated as "lowest" for a specific periodic MUSIM gap, the base station may, when configuring the corresponding periodic MUSIM gap, configure GapPriority-r17 to the largest integer value, to a value greater than or equal to a specific integer, or to a value always higher than that of a Type-2 MG, or may not configure the GapPriority-r17. Alternatively, if the base station receives, from the UE, a preferred gap priority indicated as "highest" for a specific periodic MUSIM gap, the base station may, when configuring the corresponding periodic MUSIM gap, configure the GapPriority-r17 to the smallest integer value, to a value lower than or equal to a specific integer, or to a value always lower than that of a Type-2 MG.

In step 8-45, the USIM 1 UE 8-02 may transmit a predetermined RRC message to the base station 1 8-04 in response to the predetermined RRC message received in step 8-40. For example, the predetermined RRC message may indicate RRCReconfigurationComplete.

In step 8-50, the base station 1 8-04 may transmit a predetermined RRC message (for example, an RRCReconfiguration message) including measurement gap configuration information (MeasGapConfig) to the USIM 1 UE 8-02. The description of a measurement gap is given in the description of FIG. 6. The MeasGapConfig may include one or multiple gap configuration(s) (GapConfig-r17 IE(s)). In addition, the predetermined RRC message (for example, the RRCReconfiguration message) including the MeasGapConfig is not limited to the order illustrated in this drawing. For example, the message of step 8-50 may be transmitted before a time point at which the message of step 8-40 is transmitted. In addition, the base station 1 8-04 may transmit one message (for example, an RRCReconfiguration message) including both the musim-GapConfig and the MeasGapConfig.

Specifically, GapConfig-r17 may have an ASN.1 structure as shown in Table 8 below.

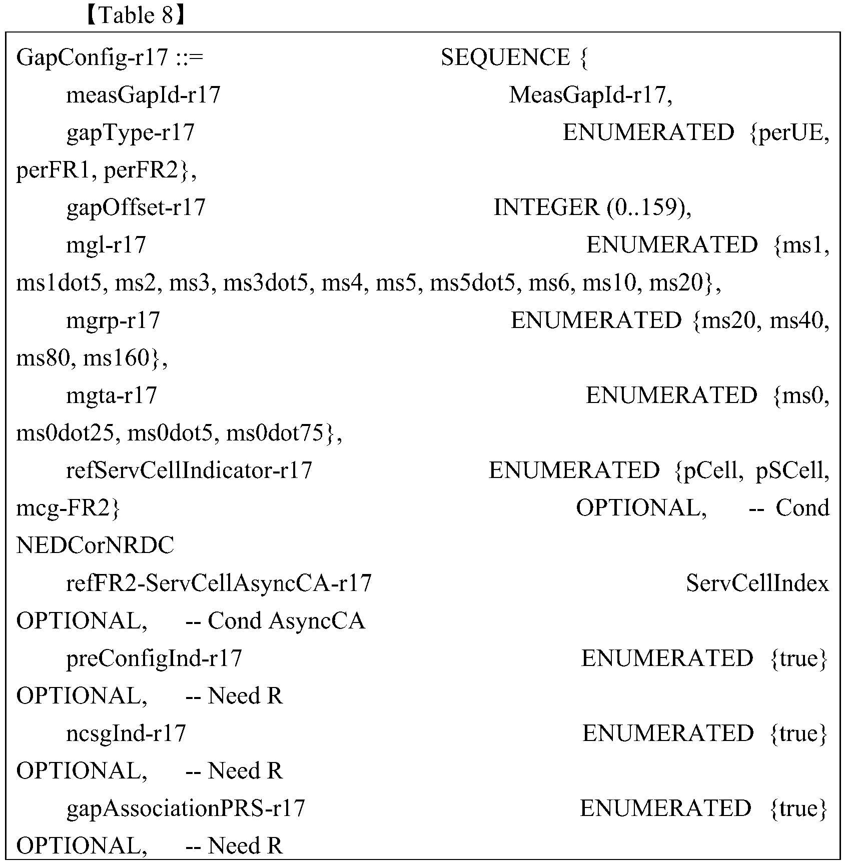

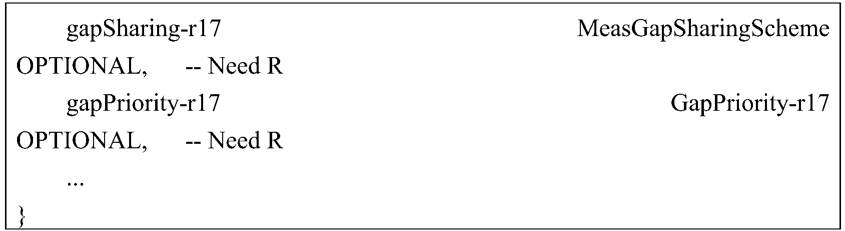

In the disclosure, a Type-2 MG may refer to a measurement gap configured by GapConfig-r17, and in this case, the Type-2 MG may indicate that preConfigInd-r17 and ncsgInd-r17 are not configured as true. In the disclosure, the base station may configure GapPriority-r17 for the Type-2 MG. When the base station configures a gap priority for the Type-2 MG, the base station may configure the gap priority lower than a gap priority of a periodic MUSIM gap indicated as "highest". The UE may transmit, to the base station, a gap priority value other than "highest" for the periodic MUSIM gap, and when the gap priority for the Type-2 MG is higher, the UE may be configured to transmit UEAssistanceInformation to the base station so that the priority value of the periodic MUSIM gap is changed.

In step 8-55, the USIM 1 UE 8-02 may determine that the configured Type-2 MG and a periodic MUSIM gap overlap or conflict on the time axis.

In step 8-60, the USIM 1 UE 8-02 may transmit a UEAssistanceInformation message to the base station 1 8-04 when a gap priority of the periodic MUSIM gap is lower than that of the Type-2 MG but the UE intends to apply the periodic MUSIM gap. In the disclosure, the UE may transmit a UEAssistanceInformation message to the base station 8-04, the UEAssistanceInformation message including an indicator requesting a gap priority preference for the periodic MUSIM gap to be configured higher than the conflicting Type-2 MG, as information indicating that the gap priority preference is "highest".

In step 8-65, the base station 1 8-04 may transmit the RRC Reconfiguration message including the changed musim-GapConfig to the USIM 1 UE 8-02. Based on step 8-60, the base station may configure a value of the GapPriority-r17 for the periodic MUSIM gap to be lower than that of the Type-2 MG. Alternatively, the base station may release or modify the Type-2 MG. Therefore, the USIM 1 UE 8-02 may apply/use the periodic MUSIM gap with priority over the Type-2 MG.

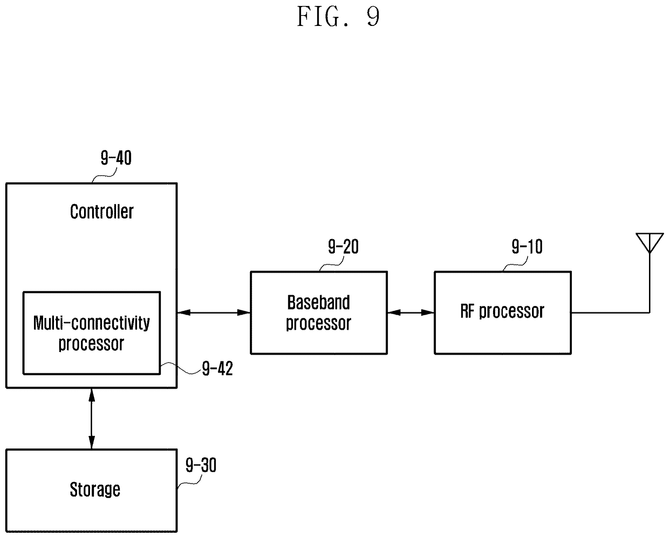

FIG. 9 is a block diagram illustrating an internal structure of a UE according to an embodiment of the disclosure.

Referring to the drawing, the UE may include a radio frequency (RF) processor 9-10, a baseband processor 9-20, a storage 9-30, and a controller 9-40.

The RF processor 9-10 may perform functions for transmitting/receiving signals through a radio channel, such as signal band conversion and amplification. That is, the RF processor 9-10 may up-convert a baseband signal provided from the baseband processor 9-20 to an RF band signal, may transmit the same through an antenna, and may down-convert an RF band signal received through the antenna to a baseband signal. For example, the RF processor 9-10 may include a transmission filter, a reception filter, an amplifier, a mixer, an oscillator, a digital-to-analog converter (DAC), an analog-to-digital converter (ADC), and the like. Although only one antenna is illustrated in the drawing, the UE may include multiple antennas. In addition, the RF processor 9-10 may include multiple RF chains. Furthermore, the RF processor 9-10 may perform beamforming. For the beamforming, the RF processor 9-10 may adjust the phase and magnitude of signals transmitted/received through multiple antennas or antenna elements, respectively. In addition, the RF processor may perform MIMO, and may receive multiple layers when performing a MIMO operation.

The baseband processor 9-20 may perform functions of conversion between baseband signals and bitstrings according to the physical layer specifications of the system. For example, during data transmission, the baseband processor 9-20 may encode and modulate a transmitted bitstring to generate complex symbols. In addition, during data reception, the baseband processor 9-20 may demodulate and decode a baseband signal provided from the RF processor 9-10 to restore a received bitstring. For example, when following the orthogonal frequency division multiplexing (OFDM) scheme, during data transmission, the baseband processor 9-20 may encode and modulate a transmitted bitstring to generate complex symbols, may map the complex symbols to subcarriers, and may configure OFDM symbols through inverse fast Fourier transform (IFFT) operation and cyclic prefix (CP) insertion. In addition, during data reception, the baseband processor 9-20 may split a baseband signal provided from the RF processor 9-10 at the OFDM symbol level, may restore signals mapped to subcarriers through a fast Fourier transform (FFT) operation, and may restore a received bitstring through demodulation and decoding.

The baseband processor 9-20 and the RF processor 9-10 may transmit and receive signals as described above. Therefore, the baseband processor 9-20 and the RF processor 9-10 may be referred to as a transmitter, a receiver, a transceiver, or a communication unit. Furthermore, at least one of the baseband processor 9-20 and the RF processor 9-10 may include multiple communication modules to support multiple different radio access technologies. In addition, at least one of the baseband processor 9-20 and the RF processor 9-10 may include different communication modules to process signals in different frequency bands. For example, the different radio access technologies may include a wireless LAN (e.g., IEEE 802.11), a cellular network (e.g., LTE), and the like. In addition, the different frequency bands may include super high frequency (SHF) (e.g., 2 NRHz) bands and millimeter wave (mmWave) (e.g., 60GHz) bands.

The storage 9-30 may store basic programs, application programs, and data, such as configuration information, for operation of the main base station. Particularly, the storage 9-30 may store information regarding a second access node configured to perform wireless communication by using a second radio access technology. In addition, the storage 9-30 may provide the stored data at the request of the controller 9-40.

The controller 9-40 controls the overall operation of the UE. The controller 9-40 may control the UE to perform at least one or a combination of methods corresponding to the above-described embodiments. For example, the controller 9-40 may transmit/receive signals through the baseband processor 9-20 and the RF processor 9-10. In addition, the controller 9-40 records data in the storage 9-30 and reads the data from the storage 9-30. To this end, the controller 9-40 may include at least one processor. For example, the controller 9-40 may include a communication processor (CP) configured to perform control for communication, and an application processor (AP) configured to control upper layers such as application programs.

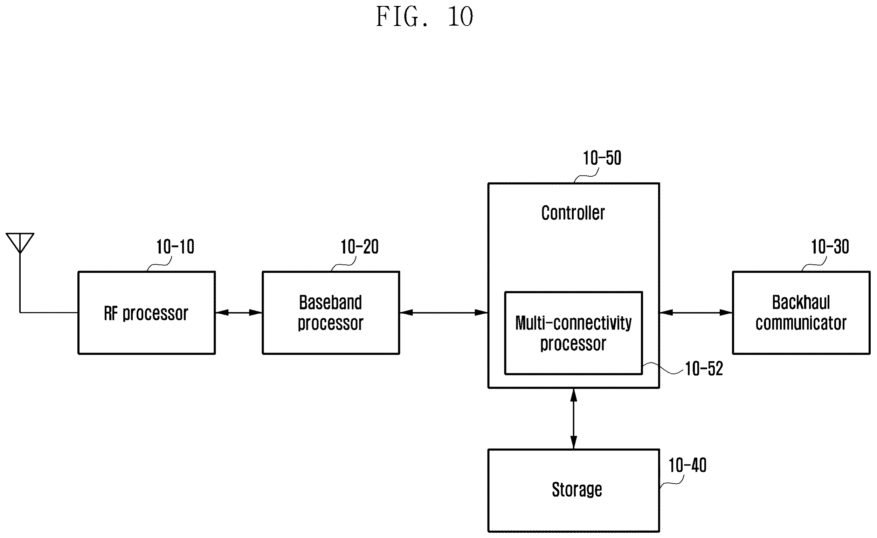

FIG. 10 is a block diagram illustrating a structure of an NR base station according to an embodiment of the disclosure.

As illustrated in the drawing, the base station may include an RF processor 10-10, a baseband processor 10-20, a backhaul communication unit 10-30, a storage 10-40, and a controller 10-50.

The RF processor 10-10 may perform functions for transmitting/receiving signals through a radio channel, such as signal band conversion and amplification. That is, the RF processor 10-10 may up-convert a baseband signal provided from the baseband processor 10-20 to an RF band signal, may transmit the same through an antenna, and may down-convert an RF band signal received through the antenna to a baseband signal. For example, the RF processor 10-10 may include a transmission filter, a reception filter, an amplifier, a mixer, an oscillator, a DAC, and an ADC. Although only one antenna is illustrated in the drawing, the first access node may include multiple antennas. In addition, the RF processor 10-10 may include multiple RF chains. Furthermore, the RF processor 10-10 may perform beamforming. For the beamforming, the RF processor 10-10 may adjust the phase and magnitude of signals transmitted/received through multiple antennas or antenna elements, respectively. The RF processor may transmit one or more layers to perform a downward MIMO operation.

The baseband processor 10-20 may perform functions of conversion between baseband signals and bitstrings according to the physical layer specifications of a first radio access technology. For example, during data transmission, the baseband processor 10-20 may encode and modulate a transmitted bitstring to generate complex symbols. In addition, during data reception, the baseband processor 10-20 may demodulate and decode a baseband signal provided from the RF processor 10-10 to restore a received bitstring. For example, when following the OFDM scheme, during data transmission, the baseband processor 10-20 may encode and modulate a transmitted bitstring to generate complex symbols, may map the complex symbols to subcarriers, and may configure OFDM symbols through IFFT operation and CP insertion. In addition, during data reception, the baseband processor 10-20 may split a baseband signal provided from the RF processor 10-10 at the OFDM symbol level, may restore signals mapped to subcarriers through FFT operation, and may restore a received bitstring through demodulation and decoding. The baseband processor 10-20 and the RF processor 10-10 may transmit and receive signals as described above. Therefore, the baseband processor 10-20 and the RF processor 10-10 may be referred to as a transmitter, a receiver, a transceiver, or a communication unit.

The backhaul communication unit 10-30 provides an interface for communicating with other nodes in the network. That is, the backhaul communication unit 10-30 converts bitstrings transmitted from the main base station to other nodes, for example, an auxiliary base station, a core network, etc., into physical signals, and converts physical signals received from the other nodes into bitstrings.

The storage 10-40 may store basic programs, application programs, and data, such as configuration information, for operation of the main base station. Particularly, the storage 10-40 may store information regarding a bearer allocated to a connected UE, a measurement result reported from the connected UE, and the like. In addition, the storage 10-40 may store information serving as a reference to determine whether to provide multi-connectivity to a UE or to suspend the same. In addition, the storage 10-40 may provide the stored data at the request of the controller 10-50.

The controller 10-50 controls the overall operation of the main base station. The controller 10-40 may control the base station to perform at least one or a combination of methods corresponding to the above-described embodiments. For example, the controller 10-50 transmits/receives signals through the baseband processor 10-20 and the RF processor 10-10 or through the backhaul communication unit 10-30. In addition, the controller 10-50 records data in the storage 10-40 and reads the data from the storage 10-40. To this end, the controller 10-50 may include at least one processor.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. It will be apparent to those skilled in the art that, in addition to the embodiments set forth herein, other variants based on the technical idea of the disclosure may be implemented. Also, the above respective embodiments may be employed in combination, as necessary.

## Claims

1. A method performed by a user equipment (UE) in a wireless communication system, the method comprising:
receiving, from a base station, a first radio resource control (RRC) reconfiguration message including information indicating that the UE is allowed to provide multi-universal subscriber identity module (MUSIM) assistance information for gap priority; and
transmitting, to the base station, a UE assistance information message including a MUSIM gap priority preference list indicating MUSIM gap priorities preferred by the UE,
wherein the MUSIM gap priority preference list includes information representing respective priorities for all periodic MUSIM gap preference patterns as integer values.

2. The method of claim 1, further comprising transmitting, to the base station, a UE capability information message including information indicating whether the UE supports provision of MUSIM assistance information including a MUSIM gap priority preference.

3. The method of claim 1, further comprising receiving, from the base station, a second RRC reconfiguration message including MUSIM gap configuration information configured based on the UE assistance information message.

4. The method of claim 1, wherein the first RRC reconfiguration message further includes information indicating a value of a timer related to reporting of a MUSIM gap priority preference, and
wherein the UE assistance information message is transmitted in case that the timer is not running.

5. A method performed by a base station in a wireless communication system, the method comprising:
transmitting, to a user equipment (UE), a first radio resource control (RRC) reconfiguration message including information indicating that the UE is allowed to provide multi-universal subscriber identity module (MUSIM) assistance information for gap priority; and
receiving, from the UE, a UE assistance information message including a MUSIM gap priority preference list indicating MUSIM gap priorities preferred by the UE,
wherein the MUSIM gap priority preference list includes information representing respective priorities for all periodic MUSIM gap preference patterns as integer values.

6. The method of claim 5, further comprising receiving, from the UE, a UE capability information message including information indicating whether the UE supports provision of MUSIM assistance information including a MUSIM gap priority preference.

7. The method of claim 5, further comprising transmitting, to the UE, a second RRC reconfiguration message including MUSIM gap configuration information configured based on the UE assistance information message.

8. The method of claim 5, wherein the first RRC reconfiguration message further includes information indicating a value of a timer related to reporting of a MUSIM gap priority preference, and
wherein the UE assistance information message is received in case that the timer is not running.

9. A user equipment (UE) in a wireless communication system, the UE comprising:
a transceiver; and
a controller configured to:
receive, from a base station through the transceiver, a first radio resource control (RRC) reconfiguration message including information indicating that the UE is allowed to provide multi-universal subscriber identity module (MUSIM) assistance information for gap priority; and
transmit, to the base station through the transceiver, a UE assistance information message including a MUSIM gap priority preference list indicating MUSIM gap priorities preferred by the UE, and
wherein the MUSIM gap priority preference list includes information representing respective priorities for all periodic MUSIM gap preference patterns as integer values.

10. The UE of claim 9, wherein the controller is configured to transmit, to the base station through the transceiver, a UE capability information message including information indicating whether the UE supports provision of MUSIM assistance information including a MUSIM gap priority preference.

11. The UE of claim 9, wherein the controller is configured to receive, from the base station through the transceiver, a second RRC reconfiguration message including MUSIM gap configuration information configured based on the UE assistance information message.

12. The UE of claim 9, wherein the first RRC reconfiguration message further includes information indicating a value of a timer related to reporting of a MUSIM gap priority preference, and
wherein the UE assistance information message is transmitted in case that the timer is not running.

13. A base station in a wireless communication system, the base station comprising:
a transceiver; and
a controller configured to:
transmit, to a user equipment (UE) through the transceiver, a first radio resource control (RRC) reconfiguration message including information indicating that the UE is allowed to provide multi-universal subscriber identity module (MUSIM) assistance information for gap priority; and
receive, from the UE, a UE assistance information message including a MUSIM gap priority preference list indicating MUSIM gap priorities preferred by the UE, and
wherein the MUSIM gap priority preference list includes information representing respective priorities for all periodic MUSIM gap preference patterns as integer values.

14. The base station of claim 13, wherein the controller is configured to receive, from the UE through the transceiver, a UE capability information message including information indicating whether the UE supports provision of MUSIM assistance information including a MUSIM gap priority preference.

15. The base station of claim 13, wherein the controller is configured to transmit, to the UE through the transceiver, a second RRC reconfiguration message including MUSIM gap configuration information configured based on the UE assistance information message,
wherein the first RRC reconfiguration message further includes information indicating a value of a timer related to reporting of a MUSIM gap priority preference, and
wherein the UE assistance information message is received in case that the timer is not running.
